# EUROPEAN PATENT APPLICATION

(11) **EP 4 550 109 A1**
(43) Date of publication of application: **07.05.2025**
(21) Application number: 24207135.5
(22) Date of filing: 17.10.2024
(51) Int. Cl.: G06F 3/12, G06F 1/26, H04N 1/00

(54) **PRINTING APPARATUS, CONTROL METHOD, AND PROGRAM**

(30) Priority: 30.10.2023 JP 2023185640
(71) Applicant: CANON KABUSHIKI KAISHA, Tokyo 146-8501 (JP)
(72) Inventor: ONOGUCHI, Ryota, Tokyo 146-8501 (JP)
(74) Representative: TBK

(57) **Abstract**

A technique capable of acquiring printing time according to the status of power supply to a power storage portion is provided. A printing apparatus that comprises a power storage unit (302) capable of storing power supplied via a USB cable and can operate using the power supplied from the power storage unit, the printing apparatus (10) includes: a printing unit (206) configured to perform printing on a printing medium; and a notification unit (216) configured to provide notification of charging time in which the power storage unit is charged with power supplied from the USB cable and time based on printing time in which the printing medium is printed by the printing unit.

## Description

### BACKGROUND OF THE INVENTION

### Field of the Invention

The present invention relates to a printing apparatus, a control method, and a program.

### Description of the Related Art

Conventionally, there is known a printing apparatus that performs printing using power stored in a power storage portion. In such a printing apparatus, during a printing operation, printing is performed utilizing the power stored in the power storage portion. However, in a case where the amount of the stored power falls to equal to or lower than a certain level, the printing operation is stopped in order to charge the power storage portion. Japanese Patent Laid-Open No. 2009-125996 discloses a technique for calculating the number of remaining sheets to be printed and remaining printing time during printing being executed, and conditions for the calculation include time in which the power storage portion can be driven.

However, the technique disclosed in Japanese Patent Laid-Open No. 2009-125996 does not take into consideration the status of power supply to the power storage portion in charging the power storage portion, and there is a possibility that the calculated printing time differs from actual printing time.

### SUMMARY OF THE INVENTION

The present invention is made in view of the above problem and provides a technique that makes it possible to acquire printing time according to the status of power supply to a power storage portion.

The present invention in its first aspect provides a printing apparatus as specified in claims 1 to 13.

The present invention in its second aspect provides a control method as specified in claim 14.

The present invention in its third aspect provides a program as specified in claim 15.

According to the present invention, it is possible to acquire printing time according to the status of power supply to a power storage portion.

Further features of the present invention will become apparent from the following description of exemplary embodiments with reference to the attached drawings.

### BRIEF DESCRIPTION OF THE DRAWINGS

FIG. 1 is a schematic configuration diagram of a printing system.
FIG. 2 is a block diagram showing a configuration of a control system of a printing apparatus.
FIG. 3 is a block diagram showing a configuration of a power supply system of the printing apparatus.
FIG. 4 is a schematic configuration diagram of a printing portion.
FIG. 5 is a schematic configuration diagram of a reading portion.
FIG. 6 is a table showing a power supply amount for each connection standard.
FIG. 7 is a table showing an execution capability for each operation type according to a connection standard.
FIG. 8 is a flowchart showing the contents of activation notification processing.
FIGs. 9A to 9C are diagrams showing examples of notification screens displayed in the activation notification processing.
FIG. 10 is a flowchart showing the contents of notification processing during a printing operation.
FIG. 11 is a diagram showing an example of a notification screen displayed in the notification processing in FIG. 10.
FIG. 12 is a flowchart showing the contents of notification processing during a copying operation.
FIG. 13 is a flowchart of reading time notification processing, which is a subroutine of the notification processing.
FIG. 14 is a flowchart of printing time notification processing, which is a subroutine of the notification processing.
FIGs. 15A to 15C are diagrams showing examples of a display screen and a notification screen.

### DESCRIPTION OF THE EMBODIMENTS

Hereinafter, an example of an embodiment of a printing apparatus, a control method, and a program will be described with reference to the accompanying drawings. It should be noted that the following embodiments do not limit the present invention, and not all of the combinations of features described in the present embodiments are essential to a solution to the problem to be solved by the present invention. Further, the positions, shapes, and the like of constituents described in the embodiments are merely examples and are not intended to limit the present invention only thereto.

### First Embodiment

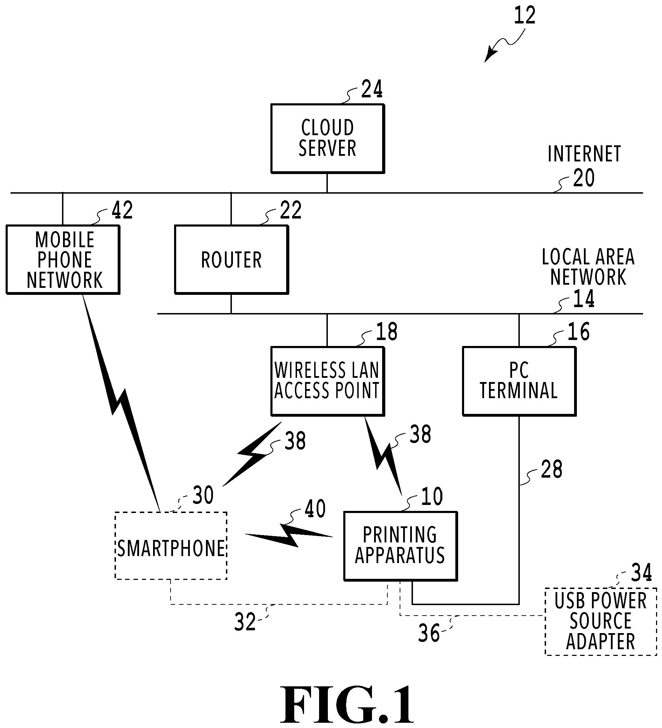

First, a printing apparatus according to a first embodiment will be described with reference to FIGs. 1 to 9C.

### Printing System

FIG. 1 is a schematic configuration diagram showing a printing system including a printing apparatus according to the present embodiment. A printing system 12 including a printing apparatus 10 according to the present embodiment includes the printing apparatus 10 that ejects ink to perform printing and a PC terminal 16 as an external device connected to the printing apparatus 10 via a local area network 14. The printing system 12 includes a wireless LAN access point 18, and the printing apparatus 10 can be connected to the local area network 14 by wirelessly connecting to the wireless LAN access point 18. The printing system 12 also includes a router 22 for connecting the local area network 14 to the Internet 20, and a cloud server 24 connected to the Internet 20. As a result, the printing apparatus 10 and the PC terminal 16 can communicate with the cloud server 24 connected to the Internet 20 via the router 22.

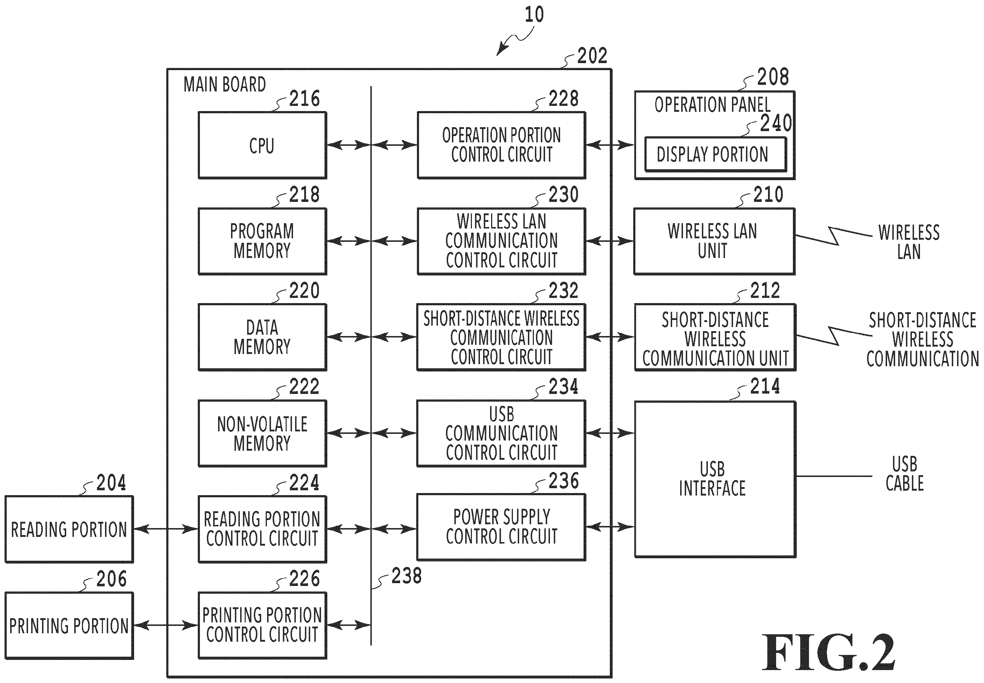

The printing apparatus 10 includes a universal serial bus (USB) interface 214 (see FIG. 2) and is configured to be connectable to various devices. In the present embodiment, the printing apparatus 10 includes the USB interface 214 into and from which a USB cable can be inserted and removed and is connectable to the PC terminal 16 via a USB cable 28. This allows the printing apparatus 10 to operate using power supplied from the PC terminal 16 via the USB cable.

The printing system 12 can also use a smartphone 30 as an external device. In this case, the smartphone 30 and the printing apparatus 10 are connected via a USB cable 32, and the printing apparatus 10 can operate with power supplied from the smartphone 30. Further, in the printing system 12, the printing apparatus 10 and a USB power adapter 34 are connected via a USB cable 36, and the printing apparatus 10 can operate using power supplied from a commercial power source. Although not illustrated, the printing apparatus 10 may be connected to a mobile battery via a USB cable and can operate using power supplied from the mobile battery.

A wireless LAN infrastructure mode connection 38 is utilized between the smartphone 30 and the printing apparatus 10 on the one hand and the wireless LAN access point 18 on the other hand. The printing apparatus 10 has a mode in which the printing apparatus 10 operates as a wireless LAN access point. In a case where the printing apparatus 10 operates as an access point, the smartphone 30 can directly connect (direct connection 40) to the printing apparatus 10. The smartphone 30 can also connect to a cloud server 24 connected to the Internet 20 via a mobile phone network 42.

In a case where the printing apparatus 10 is connected to the PC terminal 16 and the smartphone 30 via a USB cable, data communication between the printing apparatus 10 on the one hand and the PC terminal 16 and the smartphone 30 on the other hand can utilize a USB interface, but the present invention is not limited to this. The printing apparatus 10 operates using power supplied from the PC terminal 16 and the smartphone 30 connected via a USB cable, and the data communication can also be executed by utilizing a wireless LAN or short-distance wireless communication. The printing system 12 shown in FIG. 1 is an example of a printing system provided with the printing apparatus 10 according to the present embodiment and may have a configuration different from that shown in FIG. 1. For example, instead of the wireless LAN access point 18 and the router 22, one constituent having these functions, such as, a router having an access point function may be used.

### Configuration of the Control System of the Printing Apparatus

Next, the configuration of the control system of the printing apparatus 10 will be described. FIG. 2 is a block diagram showing the configuration of the control system of the printing apparatus 10. The printing apparatus 10 includes a main board 202 that controls the entire printing apparatus 10, a reading portion 204 that reads an original document, a printing portion 206 that performs printing on a printing medium, and an operation panel 208 that can be operated by a user. The printing apparatus 10 also includes a wireless LAN unit 210 for being connected to a wireless LAN, a short-distance wireless communication unit 212 for short-distance wireless communication, and a USB interface 214 that can be connected to a USB cable.

The main board 202 includes a CPU 216 in a microprocessor form, a program memory 218 in a ROM form, a data memory 220 in a RAM form, and a non-volatile memory 222 capable of holding saved information even without power source supply. The main board 202 also includes a reading portion control circuit 224 for controlling the reading portion 204, a printing portion control circuit 226 for controlling the printing portion 206, and an operation portion control circuit 228 for controlling the operation panel 208. The main board 202 further includes a wireless LAN communication control circuit 230 for controlling the wireless LAN unit 210, and a short-distance wireless communication control circuit 232 for controlling the short-distance wireless communication unit 212. The main board 202 also includes a USB communication control circuit 234 for controlling the drive of the USB interface 214, and a power supply control circuit 236 for controlling the amount of power supplied from the USB interface 214. The constituents provided in the main board 202 are connected to each other via an internal bus 238.

The CPU 216 operates, based on a control program stored in the program memory 218 and information held in the data memory 220, using the data memory 220 as a work area. Further, by writing various setting values, data, and the like to the non-volatile memory 222, the CPU 216 can continuously operate based on the setting values and data written in the non-volatile memory 222 in a case where power is turned ON again after the power is turned OFF. As the non-volatile memory 222, for example, a semiconductor storage device such as a flash memory can be used.

The CPU 216 controls the reading portion 204 via the reading portion control circuit 224 to read an original document and store read data as image data in the data memory 220. The CPU 216 also controls the printing portion 206 via the printing portion control circuit 226 to print the image data stored in the data memory 220 on a printing medium based on print data obtained by image processing. Further, the CPU 216 controls the operation portion control circuit 228, thereby displaying the status of the printing apparatus 10 on the display portion 240 provided on the operation panel 208, displaying a menu of selectable functions, and accepting operations from a user.

The CPU 216 controls the wireless LAN unit 210 via the wireless LAN communication control circuit 230 to perform wireless LAN communication with another communication terminal device. The CPU 216 also controls the short-distance wireless communication unit 212 via the short-distance wireless communication control circuit 232 to detect a connection with another short-distance wireless communication terminal and to transmit and receive data to and from another short-distance wireless communication terminal. The CPU 216 also operates the USB interface 214 via the USB communication control circuit 234 to perform USB communication with another terminal device (external device) connected via a USB cable. The CPU 216 also controls the power supply control circuit 236 to grasp and control the amount of power supplied from the USB interface 214 and the amount of power stored in the power supply control circuit 236.

### Configuration of the Power Supply System of the Printing Apparatus

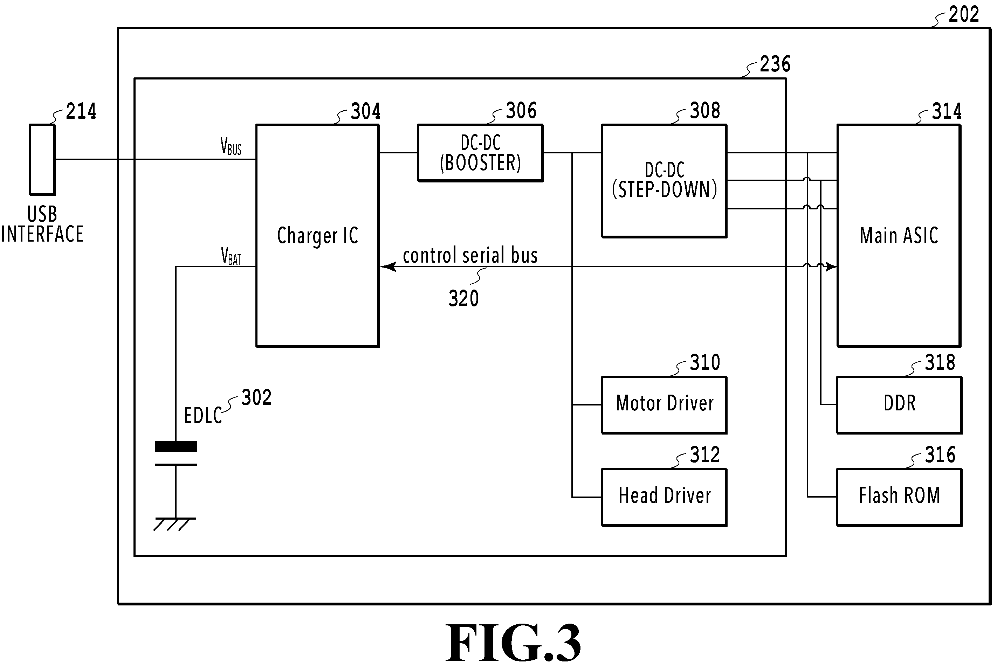

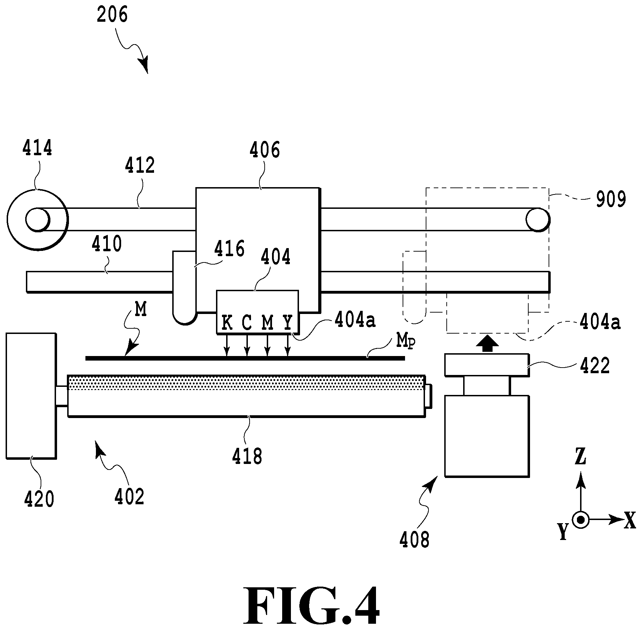

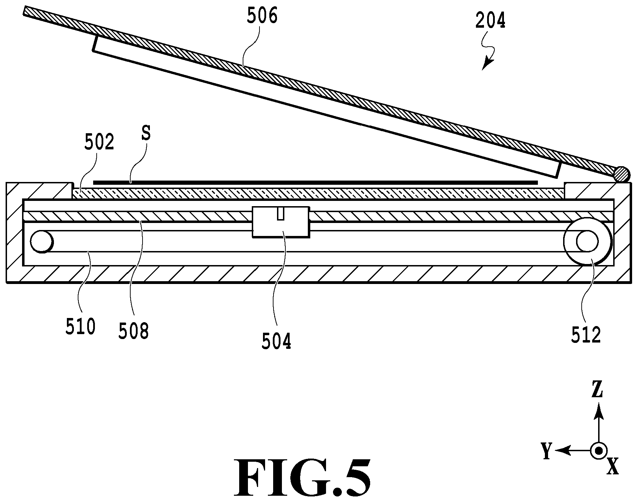

Next, the configuration of the power supply system of the printing apparatus 10 will be described. FIG. 3 is a block diagram showing the configuration of the power supply system of the printing apparatus 10. The power supply control circuit 236 includes an electric double layer capacitor (EDLC) 302 capable of storing and supplying power, and a charger IC 304 that controls an input current and the like. The power supply control circuit 236 also includes a DC-DC (booster) 306, which is a booster circuit for boosting a voltage from the charger IC 304, and a DC-DC (step-down) 308, which is a step-down circuit for stepping down the voltage output from the DC-DC 306. The power supply control circuit 236 also includes a motor driver 310 that drives motors in the reading portion 204 and the printing portion 206, and a head driver 312 that drives a reading head 504 (see FIG. 5) and a print head 404 (see FIG. 4).

The printing apparatus 10 is configured to be drivable by inputting a power source VBAT from the EDLC 302 to the charger IC 304, and power source control is performed by a power source system via the charger IC 304. That is, the printing apparatus 10 is configured to operate using power supplied from the EDLC 302. Specifically, the charger IC 304 outputs the power supplied from the EDLC 302 to the DC-DC (booster) 306. The voltage boosted by the DC-DC 306 is used by the motor driver 310 to drive the motors of the reading portion 204 and the printing portion 206. The voltage boosted by the DC-DC 306 is used by the head driver 312 to drive the reading head 504 of the reading portion 204 and the print head 404 of the printing portion 206. In the power supply control circuit 236, the voltage boosted by the DC-DC 306 is used to drive a relatively large load. Further, the power source boosted by the DC-DC 306 is input into the DC-DC 308 to generate logic power source voltages used by the ASIC 314, ROM 316, and DDR 318. Incidentally, the ASIC 314 is a custom IC that includes the CPU 216 and peripheral circuits.

The charger IC 304 is an IC having the function of executing control of an input current from the USB interface 214, charge control of the EDLC 302, and protection of the EDLC 302 against an abnormal operation. The charger IC 304 can communicate with the ASIC 314 connected via a control serial bus 320. The control serial bus 320 forms a portion of the internal bus 238. In the present embodiment, the communication between the charger IC 304 and the ASIC 314 is performed by a universal asynchronous receiver transmitter (UART) system.

Since the charger IC 304 cannot perform USB enumeration processing (hereinafter simply referred to as "enumeration processing"), the enumeration processing is executed in the ASIC 314 connected to the charger IC 304. For example, in a case where the PC terminal 16 is connected to the USB interface 214, the ASIC 314 performs the enumeration processing with the PC terminal 16 and outputs an instruction to the charger IC 304 based on a processing result to control a change of charging current of the EDLC 302.

The charger IC 304 determines an input current according to a supply source external device (such as the PC terminal 16 or the smartphone 30). In the present embodiment, for example, determination in conformity with the USB Battery Charge (USB-BC) standard (BC determination) and determination in conformity with the USB Power Delivery (USB-PD) standard (CC determination) are made. The ASIC 314 that has received the results of the BC determination and the CC determination from the charger IC 304 determines thresholds of the charging current, full charge, overdischarge voltage, and the like of the charger IC 304 and sets the thresholds in the charger IC 304. As described above, in the present embodiment, the charger IC 304 functions as a charging portion that charges the EDLC 302.

The EDLC 302 is a storage battery, is subjected to charging control by the Charger IC 304 in response to an instruction from the ASIC 314, and supplies power from the power source VBAT to the DC-DC 306, the motor driver 310, and the head driver 312. The printing apparatus 10 charges the EDLC 302 with power supplied from an external device connected via the USB interface 214. In the present embodiment, power is supplied from the PC terminal 16, the smartphone 30, the USB power adapter 34, and a mobile battery (not shown) that are connected as external devices to the printing apparatus 10. Specifically, the power source voltage VBAT of the EDLC 302 can be transmitted from the Charger IC 304 to the ASIC 314. For example, in a case where the power source voltage VBAT of the EDLC 302 drops during a printing operation by the printing apparatus 10, the ASIC 314 stops the printing operation and instructs the charger IC 304 to perform charging control until the power source voltage VBAT of the EDLC 302 reaches a certain threshold. In a case where the ASIC 314 receives notification from the charger IC 304 that the power source voltage VBAT has reached the certain threshold, the ASIC 314 then resumes the printing operation. As described above, in the present embodiment, the EDLC 302 functions as a power storage portion that stores power.

### Configuration of the Printing Portion in the Printing Apparatus

Next, the configuration of the printing portion 206 in the printing apparatus 10 will be described. FIG. 4 is a schematic configuration diagram of the printing portion 206. The printing portion 206 includes a conveyance portion 402 that conveys a printing medium M in a Y direction, and a print head 404 that ejects ink onto the printing medium M conveyed by the conveyance portion 402 to perform printing. The printing portion 206 also includes a carriage 406 on which the print head 404 is mounted and which can move in a direction (X direction) intersecting (orthogonal to in the present embodiment) a conveyance direction (Y direction) in which the printing medium M conveyed by the conveyance portion 402 is conveyed. Further, the printing apparatus 10 includes a maintenance portion 408 that can execute maintenance processing to satisfactorily maintain and recover the ink ejection performance of nozzles that eject ink in the print head 404.

The print head 404 is configured to be able to eject a plurality of different types of ink. A plurality of nozzles ejecting respective inks are arranged in parallel along a direction intersecting the X direction and form a nozzle array. In the present embodiment, the print head 404 is configured to be able to eject four types of ink: black (K) ink, cyan (C) ink, magenta (M) ink, and yellow (Y) ink. It should be noted that the types and number of inks ejected from the print head 404 are not limited to those described above.

The carriage 406 is slidably provided on a guide shaft 410 extending in the X direction and is connected to a carriage motor 414 via a belt 412. This allows the carriage 406 to move reciprocally in the X direction by driving the carriage motor 414. Thus, the print head 404 mounted on the carriage 406 is configured to be able to move (scan) from one side to the other side and from the other side to the one side in the X direction via the carriage 406.

During a printing operation, by applying a driving pulse to the print head 404 while causing the carriage 406 to perform scanning in the X direction, ink is ejected from the print head 404 onto the printing medium M. As a result, printing for one scan is performed on a printing surface Mp of the printing medium M. The carriage 406 is provided with a detection portion 416 capable of detecting the printing surface Mp of the printing medium M. This allows the printing apparatus 10 to detect the printing surface Mp using the detection portion 416 while moving the carriage 406, and to monitor a printing result produced by the print head 404 on the printing surface Mp.

The conveyance portion 402 includes a conveyance roller 418 for conveying the printing medium M, and a conveyance motor 420 for driving the conveyance roller 418. FIG. 4 shows the conveyance roller 418 not in contact with the printing medium M in the Z direction to facilitate understanding. However, in reality, the printing medium M abuts the conveyance roller 418 in the Z direction. In the conveyance portion 402, the conveyance motor 420 is driven to convey the printing medium M in the Y direction by the conveyance roller 418. In the case of performing job-based printing on the printing medium M, a printing operation is executed in which ink is ejected from the print head 404 to perform printing for one scan on the printing medium M conveyed to a print start position by the conveyance portion 402. After that, a conveying operation is executed in which the printing medium M is conveyed by a predetermined amount by the conveyance portion 402, and then the printing operation is performed again. As described above, the printing apparatus 10 performs job-based printing on a printing medium by alternately and repeatedly executing a printing operation for one scan and a predetermined amount of conveying operation.

The maintenance portion 408 is arranged in the X direction within a movement area where the carriage 406 moves and outside a print area where the printing medium M is printed by the print head 404. The maintenance portion 408 includes a cap portion 422 that abuts (caps) the print head 404 to protect the nozzle surface 404a of the print head 404. Although detailed description and illustration are omitted, the maintenance portion 408 includes various known maintenance members such as a suction portion that causes a negative pressure inside the cap portion 422 and a wiper portion that wipes the nozzle surface 404a. In the print head 404, the nozzle surface 404a is a surface that faces the printing surface Mp of the conveyed printing medium M and is a surface on which nozzles that eject ink are formed.

In the case of using the cap portion 422 for capping, the print head 404 is moved to a position (a standby position described later) where the nozzle surface 404a faces the cap portion 422 of the maintenance portion 408 (see the dashed line in FIG. 4), and then the cap portion 422 is raised. In the present embodiment, the print head 404 waits at the standby position where the nozzle surface 404a faces the cap portion 422 at the time of performing no printing operation. Performing capping after the end of job-based printing makes it possible to protect the nozzle surface 404a and suppress the evaporation of a liquid component of ink from a nozzle and the thickening of the ink in the nozzle due to the evaporation. It should be noted that even in a case where such capping is performed, the performance of ink ejection from the nozzle decreases. For this reason, the maintenance portion 408 executes maintenance processing for satisfactorily maintaining and recovering the ejection performance, for example, based on an input from a user via the operation panel 208. In the present embodiment, the maintenance portion 408 includes the cap portion 422. However, the present invention is not limited to this, and the cap portion 422 may be provided separately from the maintenance portion that includes the suction portion, the wiper portion, and the like.

### Configuration of the Reading Portion in the Printing Apparatus

Next, the configuration of the reading portion 204 in the printing apparatus 10 will be described. FIG. 5 is a schematic configuration diagram of the reading portion 204. The reading portion 204 includes a disposing portion 502 on which the original document S can be disposed, a reading head 504 capable of reading the original document S disposed on the disposing portion 502, and a cover portion 506 that presses the original document S disposed on the disposing portion 502 against the disposing portion 502. The disposing portion 502 is formed of a transparent material such as glass, and the original document S disposed on the disposing portion 502 can be read by the reading head 504 via the disposing portion 502.

The reading head 504 extends a length corresponding to the length in the X direction of the original document S readable by the reading portion 204. The reading head 504 is also provided slidably on a guide rail 508 extending in the Y direction and is connected to a scanner motor 512 via a belt 510. This allows the reading head 504 to move reciprocally in the Y direction by driving the scanner motor 512.

In a case where the reading portion 204 reads the original document S, first, in a state where the original document S is disposed on the disposing portion 502, the cover portion 506 presses the original document S against the disposing portion 502. Next, in a case where an instruction to start a reading operation is given from the operation panel 208, the reading head 504 moves from one side to the other side in the Y direction and reads the original document S disposed on the disposing portion 502 via the disposing portion 502. The read image data is subjected to analysis processing, image processing, or the like and is stored in a storage area such as the data memory 220. The reading portion 204 may be configured to be able to automatically read a plurality of original documents, for example, with an automatic document feeder (ADF).

### Connection Standard

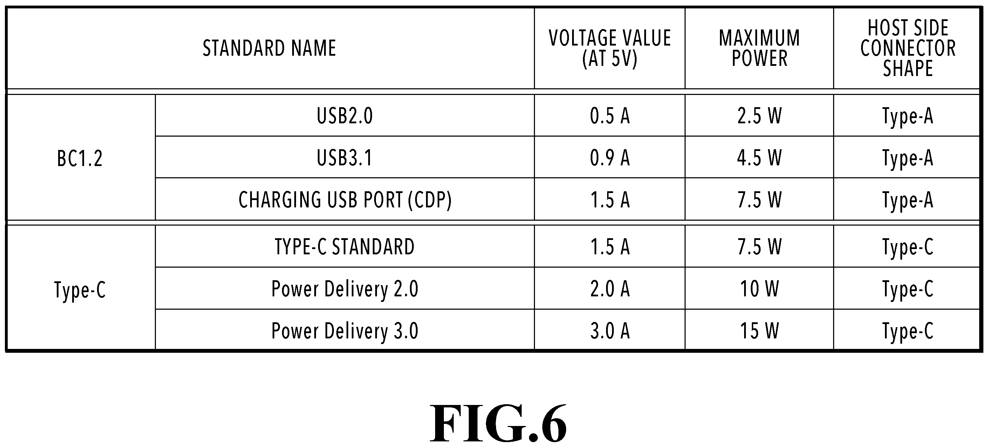

Next, standards for connection between the printing apparatus 10 and an external power source (external device) will be described. FIG. 6 is a table showing the amount of power supply for each connection standard.

BC1.2 is based on the USB-BC (Battery Charge) standard, and there is defined a method for electrically determining a charging USB port (CDP) by using D+ and D-signal lines of the USB port for data communication. Further, in the case of a standard USB port that is not a charging port, after the detection ends, communication based on the USB standard is performed, and a USB version can be determined during this process.

In addition, the Power Delivery standard is defined for USB Type-C, and notification of the amount of power supply can be provided by communication via a CC pin. It should be noted that the Power Delivery standard also allows a supply power source voltage to be controlled from 5V to 48V. However, FIG. 6 shows maximum power as a value in a case where 5V is supplied.

### Execution Capability for Each Operation Type According to a Connection Standard

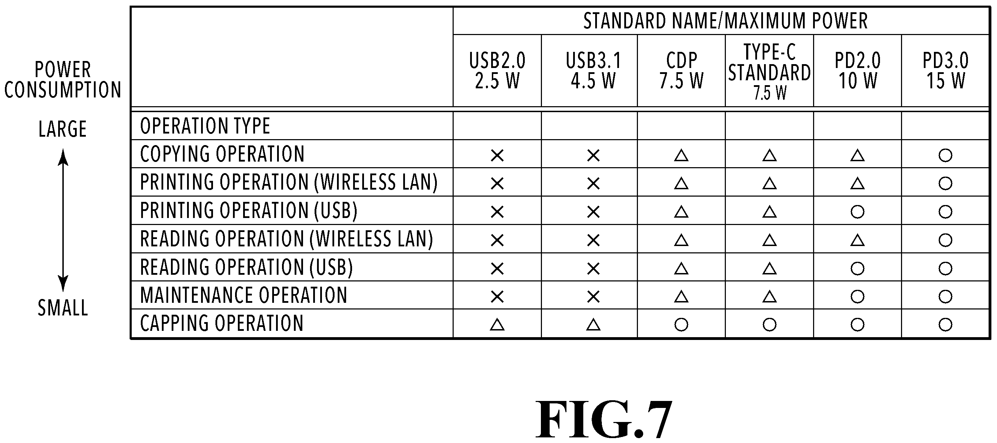

Next, a description will be given of capabilities to execute various operations executable by the printing apparatus 10 according to connection standards. FIG. 7 is a table showing capabilities to execute various operations executable by the printing apparatus 10 according to connection standards. Hereinafter, the "table showing capabilities to execute various operations executable by the printing apparatus according to connection standards" will also be simply referred to as "table showing execution capabilities" as appropriate.

FIG. 7 shows capabilities to execute operations by combinations of the types of operations (operation types) executable by the printing apparatus 10 and the types of power source supply standards (connection standards in FIG. 6). In the printing apparatus 10, a table showing execution capabilities as shown in FIG. 7 may be held as table data in the program memory 218 or may be implemented as a discrimination code as a program code.

The operation types include a copying operation for printing a read original document, a printing operation for performing printing based on print data, a reading operation for reading an original document, and a maintenance operation for the print head 404. In the maintenance operation, for example, ink is forcibly sucked from a nozzle that ejects ink, ink that does not contribute to printing is ejected into the cap portion 422 for protecting a head in which the nozzle is formed, and a surface on which the nozzle is formed is wiped. In the case of executing the maintenance operation, power is consumed for driving a pump for suction, ejecting ink, moving a wiper for wiping, and the like.

The operation types also include a capping operation for protecting the print head 404 with the cap portion 422. The cap portion 422 protects the surface of the print head 404 on which the nozzle is formed, thereby suppressing ink from being dried or stuck in the nozzle, and also suppressing the print head 404 from being moved and damaged due to vibrations in a case where the printing apparatus 10 is carried. During the capping operation, power is consumed to drive a motor for moving the print head 404 to the standby position and for pressing the cap portion 422 against the print head 404. However, only the capping operation can suppress power consumption as compared to the maintenance operation. In FIG. 7, consumed power generally increases as the position of the operation type in the table becomes closer to the top in the table.

In FIG. 7, an execution capability for each operation type is expressed on a scale of "∘," "Δ," and "×." "o" indicates that since the amount of power required for an operation is less than a power source supply capability, that is, the amount of power supplied via a USB cable by a combination of an operation type and the type of power source supply standard, the amount of power stored in the EDLC 302 does not run out (or does not fall to equal to or lower than a certain level) during the operation. It should be noted that "the amount of power supplied via a USB cable" is "the amount of power supplied from a terminal device connected via a USB cable." Thus, an operation marked with "o" indicates that the operation can be executed continuously. "Δ" indicates that since the amount of power required for an operation is equal to or greater than a power source supply capability, that is, the amount of power supplied via a USB cable, the amount of power stored in the EDLC 302 runs out (or falls to equal to or less than a certain level) during the operation. Thus, the operation can be performed by being stopped and charging the EDLC 302.

For this reason, an operation marked with "Δ" cannot be executed continuously, but can be executed conditionally, such as by being executed intermittently with appropriate rest periods for charging, "×" indicates that power required for an operation is significantly higher than a power source supply capability and that even in a case where the EDLC 302 is charged, workability significantly decreases, which is not practical.

### Activation Notification Processing

In the above configuration, in a case where the printing apparatus 10 is activated after being connected to an external device (external power source) via a USB cable, activation notification processing is executed to provide notification of printing time per printing medium according to the amount of power supplied from the USB cable. In other words, the printing apparatus 10 enters an activation waiting state by the USB cable being connected to the USB interface 214 and the power supply control circuit 236 that has received power supply from the USB interface receiving power supply. From this state, in a case where a user operates the operation panel 208 and presses an activation button (not shown), the activation notification processing is started. Alternatively, the printing apparatus 10 may be automatically activated in a case where the power supply control circuit 236 receives power supply and the EDLC 302 is charged to start the activation notification processing.

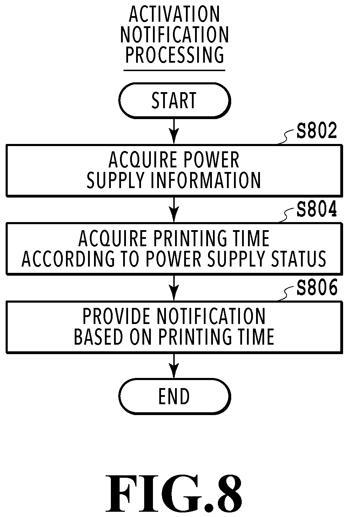

FIG. 8 is a flowchart showing the detailed processing contents of the activation notification processing for providing notification of printing time per printing medium according to the amount of power supply from a USB cable at the time of activation of the printing apparatus 10. A series of steps shown in the flowchart in FIG. 8 is performed by the CPU 216 expanding a program code stored in the program memory 218 into the data memory 220 and executing the program code. Alternatively, a portion or all of the functions of steps in FIG. 8 may be executed by hardware such as an ASIC or an electric circuit. In the present specification, a reference numeral in the explanation of processing in a flowchart means a step in the flowchart.

In a case where the activation notification processing is started, first, in S802, the CPU 216 acquires information on power supply from the USB interface 214 (hereinafter, also referred to as "power supply information"). In the present embodiment, power supply information includes a connection standard and a power supply amount. In a case where the printing apparatus 10 is activated, the ASIC 314 performs enumeration processing with an external device connected to the USB interface 214 via a USB cable. Based on the result of the enumeration processing, an instruction is output to the charger IC 304 to control a change of charging current of the EDLC 302. The charger IC 304 determines whether the USB-BC standard or the USB-PD standard is used. Thus, the charger IC 304 or the ASIC 314 can find the amount of power supplied from the USB interface 214. Therefore, in S802, the amount of power supplied from the USB interface 214 acquired by the charger IC 304 or the ASIC 314 is acquired. The power supply information from the USB interface 214 may also be configured to be able to be acquired only from the charger IC 304. Accordingly, in S802, the power supply information acquired in the enumeration processing is used. As described above, in the present embodiment, the CPU 216 (which may include the charger IC 304 and the ASIC 314) functions as an acquisition portion that acquires the power supply information from the USB cable.

Next, in S804, the CPU 216 acquires printing time per printing medium according to the status of power supply from the USB interface 214. In S804, printing time T0 per printing medium is acquired based on printing speed in the printing apparatus 10 and the power supply information acquired in S802. In S804, first, printing time Tb serving as a reference per printing medium is calculated from printing speed Fb measured by a method for measuring print productivity of a printing apparatus defined in ISO/IEC24734, for example. It should be noted that the printing speed Fb in the printing apparatus 10 is measured, for example, at the time of shipping the printing apparatus 10, and this measured value is set in advance as the printing speed Fb. Printing time to be notified is determined according to a symbol representing a capability to execute the operation type "printing operation" based on the power supply information acquired in S802 in the table showing execution capabilities (see FIG. 7).

Specifically, in a case where a symbol representing an execution capability is "∘," since it is possible to continuously execute a printing operation by power supply via a USB cable, the printing operation can be completed within the printing time Tb. Thus, in this case, the printing time T0 to be notified, that is, printing time per printing medium is the calculated printing time Tb (printing time T0 = printing time Tb). Further, in a case where a symbol representing an execution capability is "×," even a conditional printing operation cannot be executed. Thus, in this case, the printing time T0 to be notified is not calculated.

In a case where a symbol representing an execution capability is "Δ," a conditional printing operation is performed by power supply from the EDLC 302. That is, an inactive period due to charging is inserted, and the printing operation is performed intermittently. Thus, the printing time T0 to be notified is obtained by adding, for example, operation extension time TE to the printing time Tb so as to correspond to the inactive period due to charging (that is, charging time) (printing time T0 = printing time Tb + operation extension time TE). The operation extension time TE is, for example, charging time until the completion of charging of the EDLC 302 to a certain degree. The certain degree is, for example, the amount of power required for a printing operation in which printing is performed on a predetermined number of printing media. The charging time is, for example, stored in a storage area such as the data memory 220 according to power supply information. As described above, in the present embodiment, the CPU 216 functions as an acquisition portion that acquires the printing time T0 by adding the operation extension time TE corresponding to the charging time to the printing time Tb according to the power supply information.

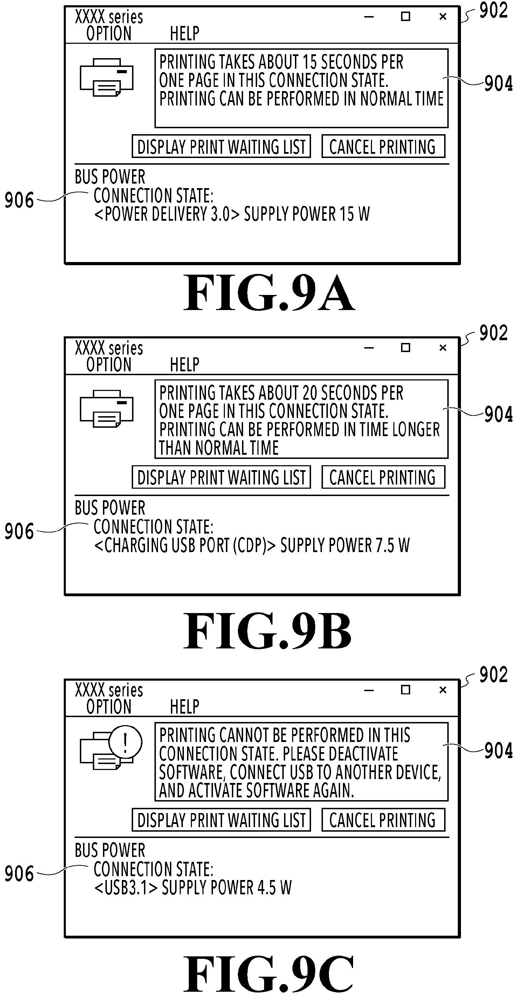

Thereafter, in S806, the CPU 216 displays a notification screen 902 based on the acquired printing time T0 on the display portion 240 of the operation panel 208 (see FIGs. 9A to 9C) and ends the activation notification processing. Here, the notification screen 902 notified in the activation notification processing will be described with reference to FIGs. 9A to 9C. FIGs. 9A to 9C are diagrams showing examples of notification screens notified in the activation notification processing. FIG. 9A shows a notification screen in a case where a symbol representing an execution capability is "∘," FIG. 9B shows a notification screen in a case where a symbol representing an execution ability is "Δ," and FIG. 9C shows a notification screen in a case where a symbol representing an execution capability is "×."

In S806, a notification screen 902 is displayed on the display portion 240. The notification screen 902 displays a display message 904 that displays printing time per printing medium, a comment indicating the printing time relatively, a countermeasure for executing a printing operation, and the like and a connection status 906 that provides notification of a power supply status. As described above, in the present embodiment, the CPU 216 functions as a notification portion that provides notification of printing time by displaying a notification screen that provides notification of the printing time on the display portion 240.

In S806, in a case where the printing time T0 is determined to be the printing time Tb, the display message 904 displays a message saying that printing time per printing medium is the printing time Tb and that printing can be performed within normal time as relative printing time (see FIG. 9A). It should be noted that it is only required that the display message 904 display at least printing time per printing medium, and a comment on a printing operation that changes depending on the power supply information acquired in S802 may be added as appropriate. Further, in the connection status 906, for example, CONNECTION STANDARD: POWERDELIVERY 3.0 and POWER SUPPLY AMOUNT (SUPPLIED POWER): 15 W are displayed based on the power supply information acquired in S802.

In S806, in a case where the printing time T0 is determined to be the printing time Tb + the operation extension time TE, the display message 904 displays a message saying that printing time per printing medium is the printing time Tb + the operation extension time TE. The display message 904 also displays a message saying that printing is performed within time longer than normal time as relative printing time (see FIG. 9B). Further, in the connection status 906, for example, CONNECTION STANDARD: CHARGING USB PORT (CDP) POWER SUPPLY AMOUNT (SUPPLIED POWER): 7.5 W is displayed based on the power supply information acquired in S802.

In S806, in a case where the printing time T0 is not calculated, a display message 904 displays a message saying that the amount of supplied power is so low that printing cannot be performed, and a comment prompting connection to an external device with a larger amount of supplied power as a countermeasure (see FIG. 9C). Further, in the connection status 906, for example, CONNECTION STANDARD: USB 3.1 and POWER SUPPLY AMOUNT (SUPPLIED POWER) 4.5 W are displayed based on the power supply information acquired in S802. In this case, for example, an icon (an exclamation mark in the present embodiment) is displayed near the display message 904 to attract the user's attention.

### Functions and Effects

As described above, the printing apparatus 10 according to the present embodiment acquires power supply information from an external device connected via a USB cable at the time of activation, and acquires the printing time T0 per printing medium during a printing operation based on the acquired power supply information. Specifically, in the printing apparatus 10, in a case where a combination of a connection standard, power supply time, and a printing operation allows a continuous printing operation, printing time in a case where printing is performed at a set printing speed is acquired as the printing time T0. In a case where the combination of the connection standard, power supply time, and printing operation allows an intermittent printing operation, a value obtained by adding time corresponding to charging time in which the EDLC 302 is charged to the printing time in a case where printing is performed at the set printing speed is acquired as the printing time T0. As a result, the printing apparatus 10 according to the present embodiment can acquire a value according to a power supply status as printing time per printing medium.

### Second Embodiment

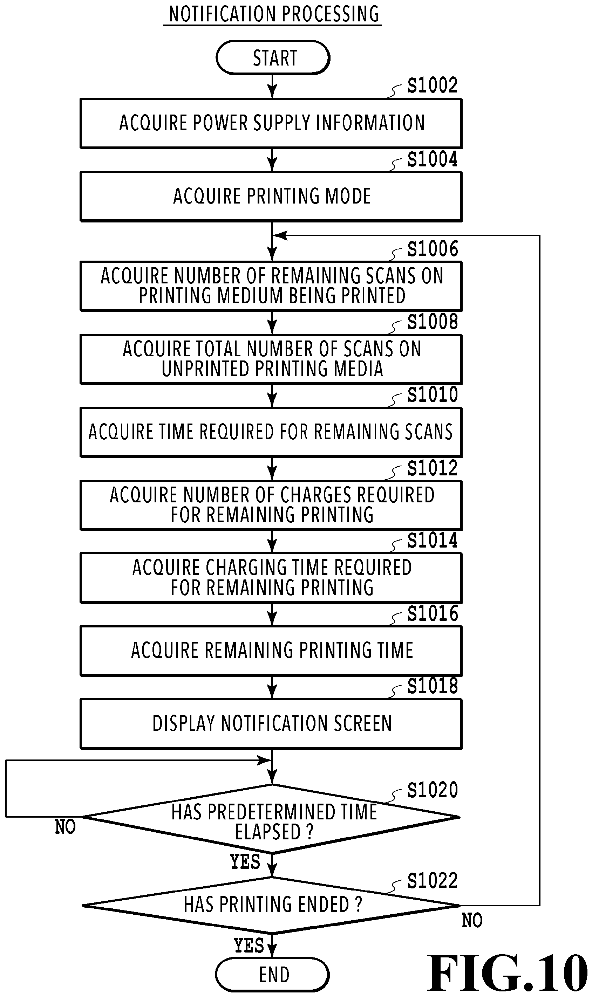

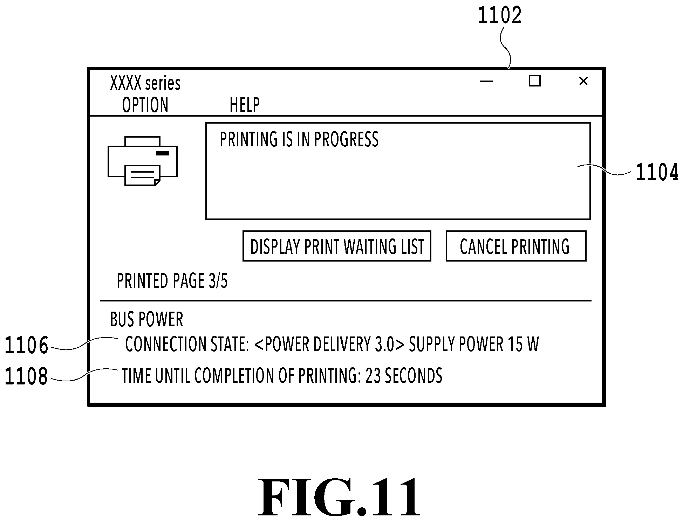

Next, a printing apparatus according to a second embodiment will be described with reference to FIG. 10 and FIG. 11. In the following description, the same reference numerals as those used in the first embodiment are used for constituents identical or corresponding to those of the printing apparatus according to the first embodiment described above, and the detailed descriptions thereof will be omitted.

The second embodiment is different from the first embodiment in that remaining printing time required for a printing operation being executed is acquired and notified in accordance with a power supply status.

### Print Mode

The printing apparatus 10 according to the present embodiment can perform printing in a plurality of print modes. The print modes include, for example, a high-speed mode in which printing speed is high but printing quality is low, a standard mode in which printing speed and printing quality are at standard levels, and a high-quality mode in which printing quality is high but printing speed is low. The amount of power consumption in these print modes decreases in the order of high-speed mode, standard mode, and high-quality mode. That is, in the high-speed mode in which printing speed is high, the amount of power consumption is large, while in the high-quality mode in which printing speed is low, the amount of power consumption is small.

### Notification Processing

In a case where a job is input and an instruction to start printing is provided, the printing apparatus 10 according to the present embodiment executes notification processing for providing notification of remaining printing time required for a printing operation being executed, that is, time until the end of the printing operation in parallel with the execution of the job-based printing operation. FIG. 10 is a flowchart showing the detailed processing contents of notification processing for providing notification of remaining printing time. A series of steps shown in the flowchart in FIG. 10 is performed by the CPU 216 expanding a program code stored in the program memory 218 into the data memory 220 and executing the program code. Alternatively, a portion or all of the functions of steps in FIG. 10 may be executed by hardware such as an ASIC or an electric circuit.

In a case where the notification processing in FIG. 10 is started, first, in S 1002, the CPU 216 acquires power supply information from the USB interface 214. Since specific processing contents of S 1002 are the same as those of S802 described above, the description thereof will be omitted. It should be noted that, for example, in a case where the power supply information has already been acquired from the USB interface 214 in the activation notification processing or the like, the already acquired power supply information is acquired in S1002. In S1004, the CPU 216 then acquires a print mode set in a job. In the present embodiment, any one of the high-speed mode, the standard mode, and the high-quality mode is set as a print mode during printing in a job.

Next, in S1006, the CPU 216 acquires the number of remaining scans Sr (the number of scans by the print head 404) on a printing medium being printed. In S1006, first, the number of scans Sa required for printing on one printing medium is acquired based on settings (such as the size of the printing medium) in the job. Next, the number of scans Sd already executed on the printing medium being printed is acquired from the data memory 220. The number of scans Sd already executed on the printing medium being printed is stored in the data memory 220. The number of scans Sd already executed during printing is monitored by, for example, the printing portion control circuit 226, and the value is stored in a storage area such as the data memory 220. The number of scans Sd already executed on the printing medium being printed is then subtracted from the number of scans Sa required for printing on one printing medium to calculate the number of remaining scans Sr on the printing medium being printed.

Thereafter, in S1008, the CPU 216 acquires the total number of scans Ss on printing media that have not yet been printed based on the settings in the job. In S1008, a value obtained by multiplying the number of printing media that have not yet been printed by the number of scans Sa required for printing on one printing medium is acquired as the total number of scans Ss. The number of printing media that have not yet been printed is obtained by subtracting the number of printing media that have already been printed from the number of sheets to be printed corrected by the job. It should be noted that the number of printing media that have already been printed is held in a storage area such as the data memory 220, for example, based on monitoring by the printing portion control circuit 226.

After acquiring the total number of scans Ss of printing media that have not yet been printed, in S1010, the CPU 216 then acquires time Tr required for remaining scans. In S1010, the CPU 216 first adds the number of remaining scans Sr on the printing medium being printed acquired in S1006 and the total number of scans Ss on printing media that have not yet been printed acquired in S1008 to acquire the total number of scans St required for remaining printing. Next, the CPU 216 acquires time T1 required for one scan based on the print mode acquired in S1004. In the printing apparatus 10, time required for one scan set for each of the high-speed mode, standard mode, and high-quality mode is stored in a storage area such as the data memory 220. After that, the CPU 216 multiplies the total number of scans St by the time T 1 required for one scan to acquire the time Tr required for remaining scans.

Next, in S1012, the CPU 216 acquires the number of charges Nc required for remaining printing. In S1012, the number of charges Nc required for remaining printing is acquired based on power consumption E1 required for one scan, the power supply information acquired in S1002, and the like. Specifically, in the table showing execution capabilities in FIG. 7, in a case where capability to execute a printing operation in the power supply information acquired in S1002 is "∘," since the printing operation can be continuously executed without charging, the number of charges Nc is "0." Further, in the table showing execution capabilities in FIG. 7, in a case where capability to execute a printing operation in the power supply information acquired in S1002 is "Δ," there is a need for charging, and the printing operation is executed intermittently. Thus, in this case, in order to acquire the number of charges Nc, first, the number of scans Sc requiring a charging operation is acquired based on the power consumption E1, a power supply amount in the power supply information, information on the EDLC 302 (the amount of stored power and capacity), and the like. In the printing apparatus 10, power consumption required for one scan set for each of the high-speed mode, the standard mode, and the high-quality mode is stored in a storage area such as the data memory 220. After that, the total number of scans St required for remaining printing is divided by the number of scans Sc requiring a charging operation to acquire the number of charges Nc required for remaining printing.

After that, in S1014, the CPU 216 acquires charging time Tc required for remaining printing. In S1014, first, charging time required for one charging operation is acquired in the EDLC 302. The charging time is stored in a storage area such as the data memory 220. Next, the acquired charging time is multiplied by the number of charges Nc required for remaining printing to acquire the charging time Tc required for remaining printing.

In S1016, the CPU 216 acquires remaining printing time Tr1 by adding the time Tr required for remaining scans acquired in S1010 and the charging time Tc required for remaining printing acquired in S1014. As described above, in the present embodiment, the CPU 216 functions as an acquisition portion that acquires the remaining printing time Tr1 by adding the charging time Tc required for remaining printing to the time Tr required for remaining scans according to the power supply information. After that, in S1018, the CPU 216 displays a notification screen 1102 (see FIG. 11) based on the remaining printing time Tr1 acquired in S1016 on the display portion 240 of the operation panel 208. It should be noted that in S1018, in a case where the notification screen 1102 has already been displayed on the display portion 240, the notification screen 1102 is updated.

Here, the notification screen 1102 will be described with reference to FIG. 11. FIG. 11 is a diagram showing an example of a notification screen for providing notification of the remaining printing time Tr1. The notification screen 1102 displays a display message 1104 saying that printing is in progress. The notification screen 1102 also displays a connection standard and a power supply amount as a connection status 1106 based on the power supply information acquired in S1002. Further, the notification screen 1102 displays a message saying that time until the completion of printing is the remaining printing time Tr1 acquired in S1018 as a remaining time display 1108.

FIG. 10 will be referred to again. After the notification screen 1102 is displayed on the display portion 240, the process proceeds to S1020, where the CPU 216 determines whether predetermined time has elapsed since the notification screen 1102 is updated. In S1020, the CPU 216 determines whether predetermined time has elapsed since the notification screen 1102 is displayed on the display portion 240 in a first determination. If it is determined in S1020 that the predetermined time has not elapsed, the determination in S1020 is performed again. On the other hand, if it is determined in S1020 that the predetermined time has elapsed, the process proceeds to S1022, where the CPU 216 determines whether job-based printing has ended. If it is determined in S1022 that the job-based printing has not ended, the process returns to S1006. If it is determined in S1022 that the job-based printing has ended, the notification processing ends.

### Functions and Effects

As described above, in the printing apparatus 10 according to the present embodiment, time required for remaining scans in job-based printing is acquired according to a print mode set in a job and the like. Further, remaining charging time in the job-based printing is acquired according to the print mode, the status of power supply from an external power source, and the like. Based on these periods of time, remaining printing time required for a printing operation being executed is acquired and notified via the notification screen 1102. As a result, the printing apparatus 10 according to the present embodiment can acquire the remaining printing time required for the printing operation being executed according to the power supply status.

### Third Embodiment

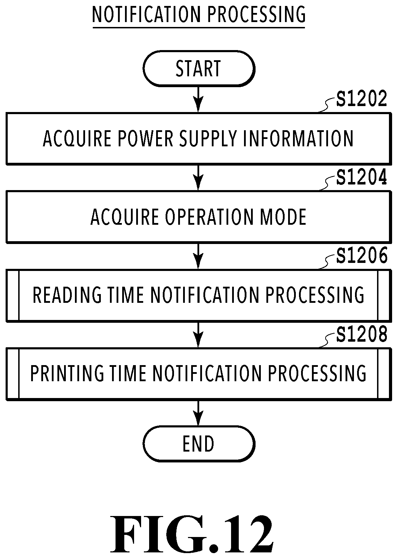

Next, a printing apparatus according to a third embodiment will be described with reference to FIGs. 12 to 15C. In the following description, the same reference numerals as those used in the first embodiment are used for constituents identical or corresponding to those of the printing apparatus according to the first embodiment described above, and the detailed descriptions thereof will be omitted.

The third embodiment is different from the first embodiment described above in that remaining reading time required for a reading operation being executed during a copying operation and remaining printing time required for a printing operation being executed during the copying operation are acquired and notified according to a power supply status. That is, during the copying operation, the printing apparatus 10 according to the third embodiment provides notification of the remaining reading time during the reading operation and provides notification of the remaining printing time during the printing operation.

### Operation Mode

The printing apparatus 10 according to the present embodiment enables copying operations in a plurality of operation modes. The operation modes include, for example, a high-speed mode in which operation speed is high but printing quality is low, a standard mode in which operation speed and printing quality are at standard levels, and a high-quality mode in which printing quality is high but operation speed is low. The amount of power consumption in these operation modes decreases in the order of high-speed mode, standard mode, and high-quality mode. In other words, the amount of power consumption is large in the high-speed mode, and small in the high-quality mode. It should be noted that, although an operation mode for a copying operation is set in the present embodiment, the present invention is not limited to this, and a print mode set in a printing operation may be made to correspond to the operation mode for the copying operation.

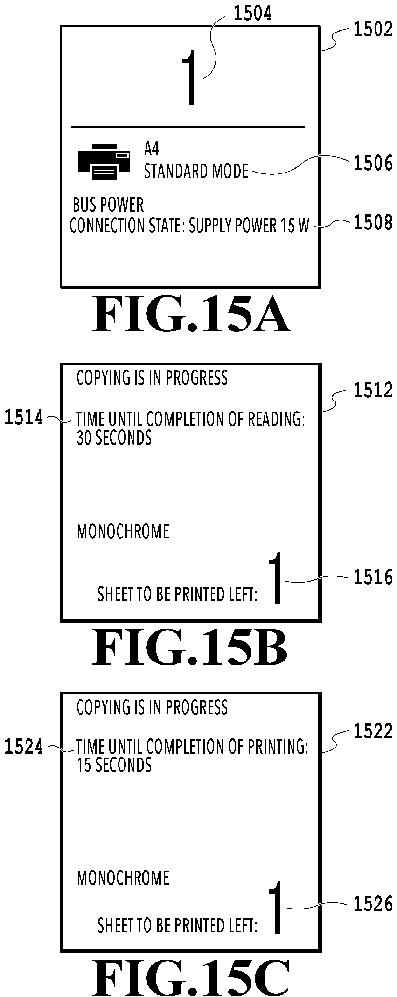

For a portion of setting information on a job for executing a copying operation, a display screen 1502 is displayed on the display portion 240, for example, in the case of checking a setting (see FIG. 15A). FIG. 15A shows the display screen 1502 for displaying a portion of setting information on a job for executing a copying operation. On the display screen 1502 in FIG. 15A, the number of read original documents to be copied is displayed as a copy number display 1504. In addition, a set operation mode is displayed as a mode display 1506. Further, a connection standard and a power supply status are displayed as a connection status 1508. The power supply information displayed as the connection status 1508 may be displayed, for example, based on the power supply information acquired in the activation notification processing or may be acquired in a case where the display screen 1502 is displayed in the display portion 240.

### Notification Processing

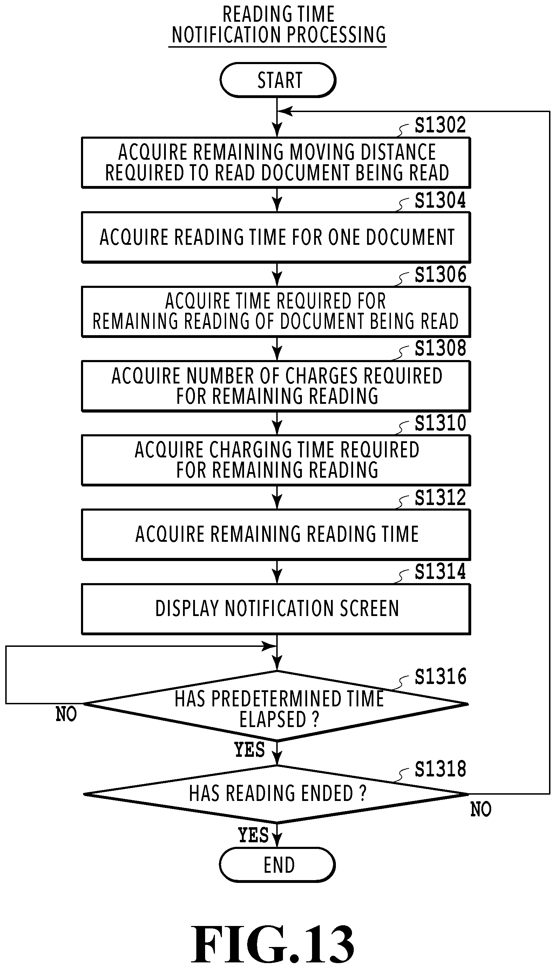

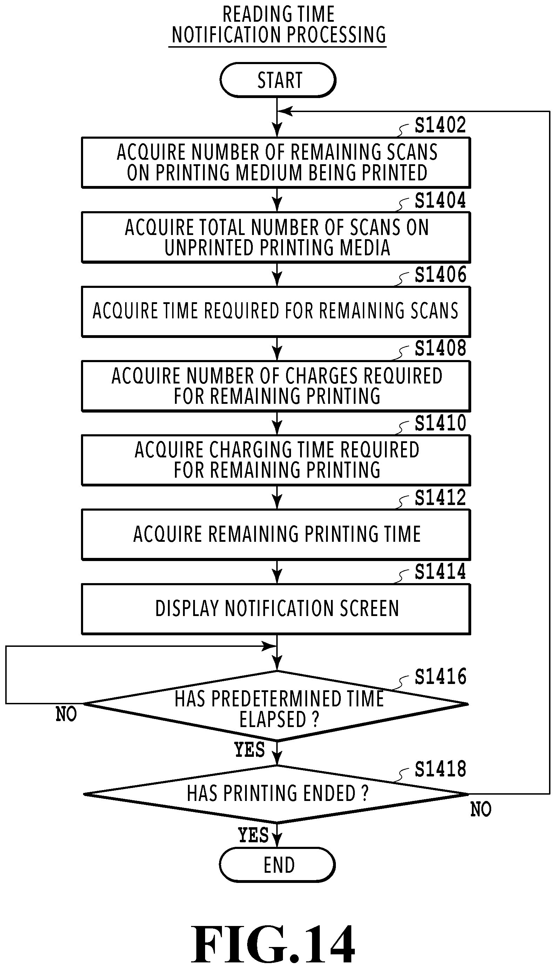

In a case where a job is input and an instruction to start copying is provided, the printing apparatus 10 according to the present embodiment executes notification processing to notify remaining reading time and printing time in parallel with the execution of a job-based copying operation. FIG. 12 is a flowchart showing the detailed processing contents of the notification processing to provide notification of the remaining reading time and remaining printing time. FIG. 13 is a flowchart showing the detailed processing contents of reading time notification processing, which is a subroutine of the notification processing. FIG. 14 is a flowchart showing the processing contents of printing time notification processing, which is a subroutine of the notification processing.

Series of steps shown in the flowcharts in FIGs. 12 to 14 are performed by the CPU 216 expanding a program code stored in the program memory 218 into the data memory 220 and executing the program code. Alternatively, a portion or all of the functions of steps in FIGs. 12 to 14 may be executed by hardware such as an ASIC or an electric circuit.

In a case where the notification processing in FIG. 12 is started, first, in S1202, the CPU 216 acquires power supply information from the USB interface 214. Since specific processing contents of S 1202 are the same as those of S802 described above, the description thereof will be omitted. For example, in a case where the power supply information has already been acquired from the USB interface 214 in the activation notification processing or the like, the already acquired power supply information is acquired in S 1202. In S1204, the CPU 216 acquires an operation mode set in a job. In the present embodiment, any one of the high-speed mode, the standard mode, and the high-quality mode is set as an operation mode during copying in the job.

Next, in S1206, the CPU 216 executes reading time notification processing for providing notification of remaining reading time required for a reading operation during a copying operation (see FIG. 13). In a case where the reading time notification processing is started, first, in S1302, the CPU 216 acquires a remaining moving distance Ar of the reading head 504 for reading an original document being read. In S1302, first, the CPU 216 acquires a moving distance Aa in a scanning direction (the Y direction in FIG. 5) in which the reading head 504 performs scanning which distance is required to read one original document being read. For this moving distance Aa, for example, in the reading portion control circuit 224, the size in the X direction of the original document read by the reading head 504 is monitored, and a moving distance in the Y direction is determined according to the size. In this case, the moving distance in the Y direction corresponding to the size in the X direction is stored in a storage area such as the data memory 220. Next, a moving distance Ad of the reading head 504 that has already moved to read the original document is acquired. The moving distance Ad of the reading head 504 that has moved at the time of reading of the original document is monitored and held, for example, in the reading portion control circuit 224. After that, the moving distance Ad is subtracted from the moving distance Aa to acquire a remaining moving distance Ar of the reading head 504 for reading the original document being read.

Next, in S1304, time T2 required to read one original document is acquired. In the printing apparatus 10, time required to read one original document according to an operation mode is held in the non-volatile memory 222. Thus, in S1304, the time T2 required to read one original document is acquired from the non-volatile memory 222 based on the operation mode acquired in S1204.

In S1306, the CPU 216 then acquires time Tp required for remaining reading of the original document being read. In S1306, a value obtained by dividing the reading time T2 acquired in S1304 by the moving distance Aa (acquired during the processing in S1302) is multiplied by the remaining moving distance Ar acquired in S1302 to acquire the time Tp required for remaining reading of the original document being read.

After that, in S1308, the CPU 216 acquires the number of charges Nc2 required for remaining reading. In S1308, first, power consumption E3 required for remaining reading is acquired from power consumption E2 at the time of reading of one original document and the remaining moving distance Ar acquired in S1302. It should be noted that in the printing apparatus 10, power consumption at the time of reading of one original document set for each of the high-speed mode, the standard mode, and the high-quality mode is stored in a storage area such as the data memory 220. After that, the number of charges Nc2 required for remaining reading is acquired based on the power consumption E3 required for remaining reading, the power supply information acquired in S1202, and the like.

Specifically, in the table showing execution capabilities in FIG. 7, in a case where capability to execute a copying operation in the power supply information acquired in S1202 is "∘," since the copying operation can be continuously executed without charging, the number of charges Nc2 is "0." Further, in the table showing execution capabilities in FIG. 7, in a case where capability to execute a copying operation in the power supply information acquired in S1202 is "Δ," there is a need for charging, and the copying operation is executed intermittently. Thus, in this case, in order to acquire the number of charges Nc2, the number of charges Nc2 is acquired based on the power consumption E3, the power supply information acquired in S1202, information on the EDLC 302 (the amount of stored power and capacity), and the like.

Next, in S1310, the CPU 216 acquires charging time Tc2 required for remaining reading. In S1310, first, time required for one charging operation is acquired in the EDLC 302. The time required for one charging operation is stored in a storage area such as the data memory 220. Next, the acquired time required for one charging operation is multiplied by the number of charges Nc2 required for remaining reading to acquire the charging time Tc2 required for remaining reading.

After that, in S1312, the CPU 216 acquires remaining reading time Tr2 required for a reading operation during a copying operation. In S1312, the remaining reading time Tr2 is acquired by adding the time Tp required for remaining reading acquired in S1306 and the charging time Tc2 required for remaining reading acquired in S1310. In S1314, the CPU 216 then displays a notification screen 1512 (see FIG. 15B) based on the remaining reading time Tr2 acquired in S1312 on the display portion 240 of the operation panel 208. It should be noted that in S1314, in a case where the notification screen 1512 is already displayed on the display portion 240, the notification screen 1512 is updated.

Here, the notification screen 1512 will be described with reference to FIG. 15B. FIG. 15B is a diagram showing the notification screen 1512 for providing notification of the remaining reading time Tr2. The notification screen 1512 displays, as a time display 1514, time until the completion of reading based on the remaining reading time Tr2 acquired in S1312. The notification screen 1512 also displays, as a remaining number 1516, the number of remaining sheets to be read.

FIG. 13 will be referred to again. After the notification screen 1512 is displayed on the display portion 240, the process proceeds to S1316, where the CPU 216 determines whether predetermined time has elapsed since the notification screen 1512 is updated. In S1316, in a first determination, it is determined whether predetermined time has elapsed since the notification screen 1512 is displayed on the display portion 240. If it is determined in S1316 that the predetermined time has not elapsed, the determination in S1316 is performed again. On the other hand, if it is determined in S1316 that the predetermined time has elapsed, the process proceeds to S1318, where the CPU 216 determines whether the reading of an original document in the copying operation has been completed. If it is determined in S1318 that the reading of the original document has not been completed, the process returns to S1302. If it is determined in S1318 that the reading of the original document has been completed, the reading time notification processing is ended, and the process proceeds to S1208, which will be described later.

FIG. 12 will be referred to again. In a case where the reading time notification processing in S1206 is completed, in S1208, the CPU 216 then starts printing time notification processing for providing notification of remaining printing time in the copying operation (see FIG. 14). In a case where the printing time notification processing starts, first, in S1402, the CPU 216 acquires the number of remaining scans Sr on the printing medium being printed. Next, in S1404, the CPU 216 acquires the total number of scans Ss on printing media that have not yet been printed based on settings in the job. After that, in S1406, the CPU 216 acquires time Tr required for remaining scans. It should be noted that since specific processing contents from S1402 to S1406 are the same as those from S1006 to S1010 described above, the description thereof will be omitted.

In S1408, the CPU 216 acquires the number of charges Nc required for remaining printing. In S1408, the number of charges Nc required for remaining printing is acquired based on the power consumption E1 required for one scan, the power supply information acquired in S1202, and the like. Specifically, in the table showing execution capabilities in FIG. 7, in a case where capability to execute a copying operation in the power supply information acquired in S1202 is "∘," since the copying operation can be continuously executed without charging, the number of charges Nc is "0." Further, in the table showing execution capabilities in FIG. 7, in a case where capability to execute a copying operation in the power supply information acquired in S1202 is "Δ," there is a need for charging, and the copying operation is executed intermittently. Thus, in this case, in order to acquire the number of power supplies Nc, first, the number of scans Sc requiring a charging operation is acquired based on the power consumption E1, the amount of supplied power in the power supply information, information on the EDLC 302, and the like. In the printing apparatus 10, power consumption required for one scan set for each of the high-speed mode, the standard mode, and the high-quality mode is stored in a storage area such as the data memory 220. After that, the total number of scans St required for remaining printing is divided by the number of scans Sc requiring a charging operation to acquire the number of charges Nc required for remaining printing.

After that, in S1410, the CPU 216 acquires the charging time Tc required for remaining printing. Next, in S1412, the CPU 216 acquires the remaining printing time Tr1 in the copying operation. In S1414, the CPU 216 then displays a notification screen 1522 (see FIG. 15C) based on the acquired remaining printing time Tr1 on the display portion 240 of the operation panel 208. It should be noted that in a case where the notification screen 1522 is displayed on the display portion 240, the notification screen 1522 is updated. Since specific processing contents from S1410 to S1414 are the same as those from S1014 to S1018 described above, the description thereof will be omitted.

Here, the notification screen 1522 will be described with reference to FIG. 15C. FIG. 15C is a diagram showing the notification screen 1522 for providing notification of the remaining printing time Tr1. The notification screen 1522 displays, as a time display 1524, time until the completion of printing based on the remaining printing time Tr1 acquired in S1414. The notification screen 1522 also displays the number of remaining sheets to be printed as a remaining number 1526.

FIG. 14 will be referred to again. After the notification screen 1522 is displayed on the display portion 240, the process proceeds to S1416, where the CPU 216 determines whether predetermined time has elapsed since the notification screen 1522 is updated. Incidentally, in S1416, in a first determination, it is determined whether the predetermined time has elapsed since the notification screen 1522 is displayed on the display portion 240. If it is determined in S1416 that the predetermined time has not elapsed, the determination in S1416 is performed again. On the other hand, if it is determined in S1416 that the predetermined time has elapsed, the process proceeds to S1418, where the CPU 216 determines whether printing in a copying operation has ended. If it is determined in S1416 that the printing has not ended, the process returns to S1402. If it is determined in S1418 that the printing has ended, the printing time notification processing is ended, and the notification processing is ended.

### Functions and Effects

As described above, the printing apparatus 10 according to the present embodiment acquires time required to read remaining original documents according to an operation mode set in a job and the like. Further, charging time required to read the remaining original documents is acquired according to the operation mode, the status of power supply from an external power source, and the like, and remaining reading time required for a reading operation during a copying operation is then acquired based on these periods of time.

Further, time required for remaining scans in printing is acquired according to an operation mode set in a job or the like. Furthermore, remaining charging time in printing is acquired according to the operation mode, the status of power supply from an external power source, and the like, and remaining printing time required for a printing operation during a copying operation is acquired based on these periods of time.

As a result, the printing apparatus 10 according to the present embodiment can acquire, during a copying operation, not only the remaining printing time according to the power supply status but also the remaining reading time according to the power supply status.

### Other Embodiments

The above-described embodiments may be modified as shown in (1) to (6) below.
(1) In the above embodiments, various notification screens and display screens are displayed on the display portion 240 provided on the operation panel 208, but the present invention is not limited thereto. For example, the notification screens and display screens may be displayed on various terminal devices connected to the printing apparatus 10 with wire or wirelessly, such as the PC terminal 16 or the smartphone 30, or may be displayed on the display portion 240 and the terminal devices.
(2) In the above embodiments, a notification screen based on acquired printing time and reading time is displayed on the display portion 240, but the present invention is not limited thereto. The acquired printing time and reading time may be output as voice guidance from a speaker provided in the operation panel 208, for example. In the above first embodiment, the printing apparatus 10 is a so-called serial scan type printing apparatus that uses a print head that ejects ink while moving in a direction intersecting the conveyance direction of a printing medium, but is not limited thereto. The printing apparatus 10 may also be a so-called full line type printing apparatus that uses a long print head that covers the entire width direction of a printing area in a printing medium. Although not specifically described in the above first embodiment, various known techniques may be used for a printing system using the printing apparatus 10.
(3) In the above embodiments, in a case where a symbol representing an execution capability is "Δ" in the table showing execution capabilities, various operations are intermittently executed by performing charging as appropriate, but the present invention is not limited thereto. For example, various operations may be executed at a lower speed in order to suppress power consumption. In this case, for example, in the activation notification processing, the printing time T0 per printing medium is calculated from printing speed Fd in a case where an operation is executed at a lower speed.
(4) Although not specifically described in the above embodiments, various pieces of information such as time required for one charge are stored in a storage area such as the data memory 220. Such various pieces of information are measured, for example, before the printing apparatus 10 is shipped, and measured values are stored in the storage area.
(5) Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.
(6) The above embodiments and the various forms shown in (1) to (5) above may be combined as appropriate.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A printing apparatus that comprises a power storage unit (302) capable of storing power supplied via a USB cable and can operate using the power supplied from the power storage unit, the printing apparatus (10) comprising:
a printing unit (206) configured to perform printing on a printing medium; and
a notification unit (216) configured to provide notification of charging time in which the power storage unit is charged with power supplied from the USB cable and time based on printing time in which the printing medium is printed by the printing unit.

2. The printing apparatus according to claim 1, further comprising:
a first acquisition unit configured to acquire power supply information on power supply from the USB cable; and
a second acquisition unit configured to acquire time based on the printing time based on the power supply information,
wherein the second acquisition unit adds the charging time to the printing time.

3. The printing apparatus according to claim 2, wherein
the second acquisition unit acquires printing time per printing medium as the printing time.

4. The printing apparatus according to claim 3, wherein
the second acquisition unit:
based on the power supply information, in a case where an amount of power required for a printing operation is less than an amount of power supplied via the USB cable, acquires time required for printing on one printing medium as the printing time at a time of performing printing at a set printing speed; and
based on the power supply information, in a case where an amount of power required for a printing operation is equal to or more than an amount of power supplied via the USB cable, adds the charging time to the time required for printing one printing medium at the time of performing printing at the printing speed in a case where the printing time is acquired.

5. The printing apparatus according to claim 4, wherein
the charging time is time required for one charge.

6. The printing apparatus according to claim 2, wherein
the second acquisition unit acquires remaining printing time in a printing operation being executed as the printing time.

7. The printing apparatus according to claim 6, wherein
the printing unit performs printing on a printing medium while performing scanning in a direction intersecting a direction in which the printing medium is conveyed, and
the second acquisition unit:
based on the power supply information, in a case where an amount of power required for a printing operation is less than an amount of power supplied via the USB cable, acquires the printing time based on a number of first scans on a printing medium being printed, a number of second scans on a printing medium which has not yet been printed, and time required for one scan; and
based on the power supply information, in a case where an amount of power required for a printing operation is equal to or more than an amount of power supplied via the USB cable, acquires the printing time by adding, to time required for the printing, the charging time required for remaining printing and calculated from a number of times the power storage unit is charged with power supplied from the USB cable and time required for one charge.

8. The printing apparatus according to claim 7, wherein
the time required for the printing and the charging time differ according to operation modes different in operation speed.

9. The printing apparatus according to claim 6, further comprising:
a reading unit capable of reading an original document,
wherein the second acquisition unit further acquires remaining reading time in a reading operation being executed based on the power supply information.

10. The printing apparatus according to claim 9, wherein
the second acquisition unit:
based on the power supply information, in a case where an amount of power required for a copying operation is less than an amount of power supplied via the USB cable, in a reading operation during the copying operation, acquires, as the reading time, time required for reading calculated from a remaining moving distance of the reading unit for reading an original document being read, time required to read one original document, and a moving distance of the reading unit required to read one original document; and
based on the power supply information, in a case where an amount of power required for a copying operation is equal to or more than an amount of power supplied via the USB cable, acquires the reading time by adding, to the time required for reading, charging time required for remaining reading and calculated from a number of times the power storage unit is charged with power supplied from the USB cable and time required for one charge.

11. The printing apparatus according to claim 10, wherein
the time required to read one original document and the charging time calculated from the number of charges required for remaining reading and the time required for one charge differ according to operation modes different in operation speed.

12. The printing apparatus according to any one of claims 1 to 11, further comprising:
a display unit configured to display information,
wherein the notification unit displays a notification screen for providing notification of the printing time on the display unit.

13. The printing apparatus according to any one of claims 1 to 12, wherein
the notification unit displays a notification screen for providing notification of the printing time on a display unit provided in a terminal device connected to the printing apparatus with the USB cable or a display unit provided on a terminal device connected to the printing apparatus by wireless connection.

14. A method of controlling a printing apparatus that comprises a power storage unit capable of storing power suppled via a USB cable and can operate using the power supplied from the power storage unit,
wherein notification of time in which the power storage unit is charged with power supplied from the USB cable and time based on time in which a printing medium is printed by a printing unit is provided.

15. A program for causing a computer to execute the method according to claim 14.
